# EUROPÄISCHE PATENTSCHRIFT

(11) **EP 2 670 672 B1**
(45) Veröffentlichungstag und Bekanntmachung des Hinweises auf die Patenterteilung: **19.11.2014**
(21) Anmeldenummer: 11807871.6
(22) Anmeldetag: 23.12.2011
(51) Int. Cl.: B65B 39/00, F16K 7/04

(54) **VENTILVORRICHTUNG UND ABFÜLLVERFAHREN**
VALVE DEVICE AND FILLING METHOD
DISPOSITIF A SOUPAPE ET PROCEDE DE REMPLISSAGE

(30) Priorität: 01.02.2011 DE 102011000430
(43) Veröffentlichungstag der Anmeldung: 11.12.2013
(73) Patentinhaber: Sartorius Lab Instruments GmbH & Co. KG, 37075 Göttingen (DE)
(72) Erfinder: JANSSENS, Paul, 2660 Hoboken (BE); MÜLLER, Michael, 37079 Göttingen (DE); DECHENEUX, Jean-Pierre, 4170 Mont Comblain (BE); WEITEMEIER, Swen, 37139 Lödingsen (DE); FIEDLER, Michael, 37520 Osterode am Harz (DE); STRIETZEL, Steffen, 37308 Siemerode (DE)
(86) Internationale Anmeldenummer: PCT/EP2011/006578
(87) Internationale Veröffentlichungsnummer: WO 2012/103916

(56) Entgegenhaltungen:
- EP-A1- 0 300 113
- CH-A5- 596 483
- DE-A1- 2 415 422
- DE-A1- 4 422 274
- US-A1- 2001 019 117

## Beschreibung

### Gebiet der Erfindung

Die Erfindung bezieht sich auf eine Ventilvorrichtung, umfassend ein erstes und ein zweites ansteuerbares Schlauchquetschventil mit je einem festen Schlauchsitz und je einem relativ zu dem festen Schlauchsitz bewegbaren und durch Federkraft in Richtung auf diesen vorgespannten Quetschstößel, der mittels einer Krafterzeugungseinheit in deren aktiviertem Zustand gegen die Federkraft in eine vorgegebene Öffnungsstellung überführbar ist.

Die Erfindung bezieht sich weiter auf ein Verfahren zum Abfüllen einer Flüssigkeit aus einem Vorratsbehälter durch einen elastischen Schlauch in einen Zielbehälter, wobei der Schlauch eingelegt ist in eine Ventilvorrichtung, umfassend ein erstes und ein zweites ansteuerbares Schlauchquetschventil mit je einem festen Schlauchsitz und je einem relativ zu dem festen Schlauchsitz bewegbaren und durch Federkraft in Richtung auf diesen vorgespannten Quetschstößel, der mittels einer Krafterzeugungseinrichtung in deren aktiviertem Zustand gegen die Federkraft in eine vorgegebene Öffnungsstellung überführbar ist.

### Stand der Technik

Abfüllvorgänge, bei denen eine Flüssigkeit über einen flexiblen Schlauch aus einem Vorratsbehälter in einen Zielbehälter abgefüllt und insbesondere dosiert werden muss, sind dem Fachmann aus unterschiedlichen Technikgebieten bekannt. Ebenso ist es bekannt, den Flüssigkeitsstrom durch den Schlauch mittels sogenannter Schlauchquetschventile zu steuern. Insbesondere sind dem Fachmann elektrisch ansteuerbare Schlauchquetschventile bekannt. Die EP 1 525 138 B1 offenbart einen Abfüllvorgang unter Verwendung eines sogenannten "Manyfold", einer Einheit aus flexiblen Beuteln und mit diesen gekoppelten, elastischen Schläuchen. Insbesondere wird eine System aus mehreren Vorratsbeuteln und mehreren Zielbeuteln offenbart, bei dem auf die Schlauchverbindung zwischen je einem Vorratsbeutel und je einem Zielbeutel zwei Schlauchquetschventile wirken. Diese werden unabhängig von einander angesteuert und dienen der Auswahl der jeweils verbundenen Paarung von Vorrats- und Zielbeutel.

Die spezielle Gestaltung elektrisch ansteuerbarer Schlauchquetschventile ist dem Fachmann ebenfalls bekannt. Insbesondere haben sich Magnet-Schlauchquetschventile, wie sie z.B. von der Firma Asco Numatics GmbH, Ölbronn-Dürrn, Deutschland, erhältlich sind, etabliert, bei denen ein beweglicher Quetschstößel durch die Kraft eines Elektromagneten relativ zu einem ambossartigen, festen Schlauchsitz bewegbar ist. So wird der Quetschstößel auf den auf dem Schlauchsitz festgelegten, elastischen Schlauch gepresst, um dessen Querschnitt zu verschließen und einen Flüssigkeitsstrom durch den Schlauch zu unterbinden. In Öffnungsstellung wird der Quetschstößel so weit zurückgezogen, dass sich der Schlauch durch die Eigenelastizität der Schlauchwände sowie den von der Flüssigkeit aufgebauten Innendruck wieder vollständig entfaltet und den Flüssigkeitsstrom zulässt. Demselben Prinzip folgen auch pneumatisch oder hydraulisch angesteuerte Schlauchquetschventile. Ein besonderer Vorteil der Schlauchquetschventile liegt darin, dass die Flüssigkeit mit keinem fremden Element, sondern lediglich mit der Schlauchinnenwandung in Berührung kommt. Dies ist insbesondere bei sterilen Anwendungen wichtig.

Typischerweise enthalten Schlauchquetschventile eine Vorspannung des Quetschstößels. Die Richtung der Vorspannung kann dabei variieren. Sogenannte "Normally-Closed"-Ventile weisen eine Vorspannung des Quetschstößels in Richtung auf den festen Schlauchsitz auf. Dies bedeutet, dass sie im nicht-aktivierten Zustand, d.h. im Fall eines Magnet-Schlauchquetschventils im unbestromten Zustand, entsprechend der Federvorspannung geschlossen sind. Die Schließkraft entspricht der Federkraft. Bei sogenannten "Normally-Open"-Ventilen ist die Vorspannung umgekehrt ausgelegt, sodass die Vorspannfeder den Quetschstößel im nicht-aktivierten Zustand vom Schlauchsitz weg in die Öffnungsstellung drückt. Bei Abfüllvorgängen werden aus Sicherheitsgründen bevorzugt "Normally-Closed"-Ventile verwendet.

Nachteilig bei bekannten Schlauchquetschventilen ist, dass sie schwer zu regulieren sind. Üblicherweise verfügen sie über lediglich eine Öffnungsstellung, in der der Querschnitt des eingelegten Schlauchs vollständig freigegeben ist und über eine Verschlussstellung, in der der Querschnitt des eingelegten Schlauchs vollständig geschlossen ist. Dies führt bei gravimetrisch überwachten Abfüllprozessen, d.h. bei Abfüllprozessen, bei denen das Gewicht des Zielbehälters kontinuierlich überwacht und die Ventilaktivität in Abhängigkeit von dem aktuellen Behältergewicht gesteuert wird, bei der Prozessauslegung zu einer schwierigen Abwägung zwischen Prozessgenauigkeit und Prozessgeschwindigkeit. Großvolumige Schläuche, die einen hohen Volumendurchsatz erlauben, führen zu Ungenauigkeiten des Abfüllprozesses, da sich bereits kleinste Fehler im Timing der Ventilsteuerung in erheblichen Volumenunterschieden im Zielbehälter auswirken. Andererseits führen kleinvolumige Schläuche aufgrund ihrer geringen Durchsatzkapazität zu unerwünschten Verzögerungen beim Abfüllprozess.

Denkbar wäre die Verwendung von Proportionalventilen, bei denen der Stellweg des Quetschstößels stufenlos verfahren werden kann. Derartige Ventile sind jedoch teuer in ihrem mechanischen und elektrischen Aufbau und aufwendig in der Ansteuerung, da der Volumendurchsatz in komplizierter, nichtlinearer und schwer zu berechnender Weise vom Stellweg des Quetschstößels abhängt.

### Aufgabenstellung

Es ist die Aufgabe der vorliegenden Erfindung, eine Vorrichtung und ein Verfahren zur Verfügung zu stellen, die schnelle und dennoch präzise Abfüllvorgänge ohne die zwingende Verwendung von Proportionalventilen erlauben.

### Darlegung der Erfindung

Die Aufgabe wird in Verbindung mit den Merkmalen des Oberbegriffs von Anspruch 1 dadurch gelöst, dass in dem zweiten Schlauchquetschventil der Weg des Quetschstößels in Richtung der Vorspannung durch einen einstellbaren Anschlag begrenzt ist.

Die Aufgabe wird weiter in Verbindung mit den Merkmalen des Oberbegriffs von Anspruch 9 dadurch gelöst, dass in dem zweiten Schlauchquetschventil der Weg des Quetschstößels in Richtung der Vorspannung durch einen einstellbaren Anschlag begrenzt ist und in einem ersten Verfahrensabschnitt die Krafterzeugungseinrichtungen beider Schlauchquetschventile aktiviert werden und in einem zweiten, nachfolgenden Verfahrensabschnitt nur die Krafterzeugungseinrichtung des ersten Schlauchquetschventils aktiviert wird.

Bevorzugte Ausführungsformen der Erfindung sind Gegenstand der abhängigen Ansprüche.

Nachfolgend sollen die Aspekte der erfindungsgemäßen Vorrichtung sowie des erfindungsgemäßen Verfahrens gemeinsam diskutiert werden.

Kerngedanke der vorliegenden Erfindung ist es, zur Erzielung unterschiedlicher Durchflussmengen durch den Schlauch ein Doppelventil mit zwei "Normally-Closed"-Ventileinheiten vorzusehen, dessen erste Ventileinheit zwischen den zwei Zuständen "ganz offen" und "ganz geschlossen" schaltet, wohingegen seine zweite Ventileinheit zwischen den beiden Zuständen "ganz offen" und "teilweise geschlossen" schaltet. Im aktivierten Zustand sind beide Ventileinheiten auf "ganz offen" geschaltet und setzen dem Volumenstrom im Schlauch kein Hindernis entgegen. Im nicht-aktivierten Zustand wird der Durchfluss allein von der ersten Ventileinheit, die auf "ganz geschlossen" geschaltet ist, bestimmt, nämlich unterbunden. Im Fall, dass die erste Ventileinheit aktiviert und die zweite Ventileinheit nicht-aktiviert ist, wird der Durchfluss allein von der zweiten Ventileinheit, die auf "teilweise geschlossen" geschaltet ist, bestimmt, nämlich teilweise unterbunden bzw. reduziert. Der umgekehrte Fall, dass die erste Ventileinheit nicht-aktiviert ist und die zweite Ventileinheit aktiviert ist, unterscheidet sich im Ergebnis nicht von dem Fall, dass beide Ventileinheiten nicht-aktiviert sind, da der Zustand "ganz geschlossen" der ersten Ventileinheit bereits für die vollständige Unterbindung des Durchflusses sorgt.

Im Ergebnis wird also eine insgesamt dreistufige Ventilvorrichtung zur Verfügung gestellt, ohne dass wesentlich von der einfachen Auslegung und Ansteuerung bekannter Ein-/Aus-Schlauchquetschventile abgewichen werden müsste. Es ist lediglich eine geringfügige mechanische Modifikation des zweiten Schlauchquetschventils erforderlich. Diese einfache mechanische Modifikation beschränkt sich auf den Einbau eines einstellbaren Anschlags, der einen vollständigen Vorschub des Quetschstößels des zweiten Ventils in dessen nicht-aktiviertem Zustand verhindert. Vielmehr verbleibt eine Restöffnung des gequetschten Schlauchquerschnitts, sodass ein Restdurchfluss durch den Schlauch in Abhängigkeit von der Einstellung des Anschlags verbleibt.

Um weitere Durchflussstufen zu realisieren, kann vorgesehen sein, eine oder beide Ventileinheiten getaktet anzusteuern und so eine Art Pulsweitenmodulation des Durchflusses zu erzeugen. So kann beispielsweise durch getaktete Bestromung der zweiten Ventileinheit bei geöffneter erster Ventileinheit eine Stufe zwischen "ganz offen" und "teilweise geschlossen" realisiert werden. Analog ist es möglich, bei geschlossener zweiter Ventileinheit durch getaktete Ansteuerung der ersten Ventileinheit eine Stufe zwischen "teilweise geschlossen" und ganz geschlossen" zu realisieren.

Bevorzugt sind beide Schlauchquetschventile auf einem gemeinsamen Träger, insbesondere in unmittelbarer Nachbarschaft zueinander angeordnet. Dies ermöglicht das einfache Einlegen eines gemeinsamen Schlauches in beide Schlauchquetschventile, sodass die erfindungsgemäße Ventilvorrichtung auch räumlich als ein Ventilmodul mit drei Schaltstufen gestaltet werden kann.

Der bevorzugte Einsatz der erfindungsgemäßen Ventilvorrichtung ist der Bereich der Abfüllvorgänge flüssiger Medien zwischen einem grundsätzlich beliebig gestalteten Vorratsbehälter und einem ebenfalls grundsätzlich beliebig gestalteten Zielbehälter. Diese sind durch einen flexiblen Schlauch, der in beide Quetschventile eingelegt, d.h. auf dem jeweils festen Schlauchsitz positioniert ist, miteinander verbunden.

Bevorzugt ist weiter eine mit den Krafterzeugungseinheiten der Schlauchquetschventile verbundene Steuereinheit vorgesehen, die in einem ersten Abschnitt eines Abfüllvorgangs, bei dem Flüssigkeit von dem Vorratsbehälter durch den Schlauch zu dem Zielbehälter transportiert wird, die Krafterzeugungseinheiten beider Schlauchquetschventile aktiviert und in einem zweiten Abschnitt des Abfüllvorgangs nur die Krafterzeugungseinheit des ersten Schlauchquetschventils aktiviert. Für das erfindungsgemäße Verfahren bedeutet dies, dass in einem ersten Verfahrensabschnitt die Krafterzeugungseinrichtungen beider Schlauchquetschventile aktiviert werden und in einem zweiten, nachfolgenden Verfahrensabschnitt nur die Krafterzeugungseinrichtung des ersten Schlauchquetschventils aktiviert wird. Mit anderen Worten erfolgt der Abfüllvorgang also zunächst bei maximalem Durchfluss mit maximaler Geschwindigkeit. Erst in einem späteren Abschnitt des Abfüllvorgangs, insbesondere wenn sich der Füllstand des Zielbehälters der maximalen Füllmenge nähert, wird der Durchfluss reduziert und damit der Vorgang verlangsamt. Dies erlaubt eine sehr präzise Dosierung, ohne dass der Gesamtvorgang entsprechend langsam ablaufen müsste.

Bei einer bevorzugten Weiterbildung der Erfindung ist vorgesehen, dass eine das Gewicht des Zielbehälters kontinuierlich erfassende Wägevorrichtung mit der Steuereinheit verbunden ist und die Steuereinheit eingerichtet ist, sobald die Wägevorrichtung einen vorgegebenen ersten Gewichtssollwert erfasst, eine Aktivierung der Krafterzeugungseinrichtung des zweiten Schlauchquetschventils zu beenden und eine Aktivierung der Krafterzeugungseinrichtung des ersten Schlauchquetschventils fortzusetzen. Im Hinblick auf das erfindungsgemäße Verfahren bedeutet dies, dass das Gewicht des Zielbehälters kontinuierlich erfasst wird und sobald ein vorgegebener erster Gewichtssollwert erreicht ist, eine Aktivierung der Krafterzeugungseinrichtung des zweiten Schlauchquetschventils beendet und eine Aktivierung der Krafterzeugungseinrichtung des ersten Schlauchquetschventils fortgesetzt wird. Mit anderen Worten bedeutet dies, dass die Füllmenge des Zielbehälters gravimetrisch überwacht wird und die oben bereits erläuterte Umschaltung zwischen dem schnellen Abschnitt des Abfüllvorgangs und dem präzisen Abschnitt des Abfüllvorgangs in Abhängigkeit von der Erreichung eines Füllgewichtes erfolgt, welches vorzugsweise geringfügig, z.B. 1 bis 5% unter dem Maximalfüllgewicht liegt.

In konsequenter Weiterbildung dieser Ausführungsform der Erfindung ist bevorzugt vorgesehen, dass die Steuereinheit weiter eingerichtet ist, nach der Beendigung der Aktivierung der Krafterzeugungseinrichtung des zweiten Schlauchquetschventils auch die Aktivierung der Krafterzeugungseinrichtung des ersten Schlauchquetschventils zu beenden, sobald die Wägevorrichung einen vorgegebenen zweiten Gewichtssollwert, der größer ist als der erste Gewichtssollwert, erfasst. Im Hinblick auf das erfindungsgemäße Verfahren bedeutet dies, dass nach der Beendigung der Aktivierung der Krafterzeugungseinrichtung des zweiten Schlauchquetschventils auch die Aktivierung der Krafterzeugungseinrichtung des ersten Schlauchquetschventils beendet wird, sobald ein vorgegebener zweiter Gewichtssollwert, der größer ist als der erste Gewichtssollwert, erreicht ist. Dies bedeutet mit anderen Worten, dass eine vollständige Abschaltung des Volumenstroms durch den Schlauch genau dann erfolgt, wenn das erwünschte, d.h. das maximale Füllgewicht des Zielbehälters erreicht ist.

Obgleich die Erfindung nicht von der speziellen Gestaltung der Krafterzeugungseinrichtung der Quetschventile und deren Aktivierung abhängt, wird die Erfindung bevorzugt unter Verwendung von Magnet-Schlauchquetschventilen realisiert, deren Krafterzeugungseinrichtungen als Elektromagneten ausgebildet sind, deren Aktivierung durch Bestromung erfolgt. Derartige Magnet-Schlauchquetschventile - jedoch ohne den erfindungswesentlichen, einstellbaren Anschlag - sind am Markt erhältlich. Die Nicht-Aktivierung erfolgt entsprechend durch Nicht-Bestromung.

Die Realisierung des erfindungswesentlichen, einstellbaren Anschlags kann auf unterschiedliche Weise erfolgen. Besonders bevorzugt ist, dass der Anschlag als eine in axialer Verlängerung des Quetschstößels angeordnete Stellschraube ausgebildet ist, die in einer formschlüssig mit einem Gehäuse des zweiten Schlauchquetschventils verbundenen, steifen Kappe gelagert ist. Der Formschluss zwischen einem Gehäuse des Schlauchquetschventils und der Kappe dient der präzisen Aufnahme der Federkräfte, mit der der Quetschstößel gegen den einstellbaren Anschlag, d.h. gegen die Stellschraube gepresst wird. Insbesondere ist hier ein Formschluss einem Kraftschluss vorzuziehen, da der Formschluss auch im Dauerbetrieb hinreichende Präzision garantiert, wohingegen der Kraftschluss mit der Zeit nachlassen könnte und daher weniger präzise, mindestens jedoch wartungsanfälliger ist.

Weitere Merkmale und Vorteile der Erfindung ergeben sich aus der nachfolgenden, speziellen Beschreibung und den Zeichnungen.

### Kurzbeschreibung der Figuren

Es zeigen:
- Figur 1:: ein Manyfold-Abfüllsystem mit einem erfindungsgemäßen Doppelventil,
- Figur 2:: eine Ausführungsform eines erfindungsgemäßen Doppelventils.

### Detaillierte Beschreibung bevorzugter Ausführungsformen

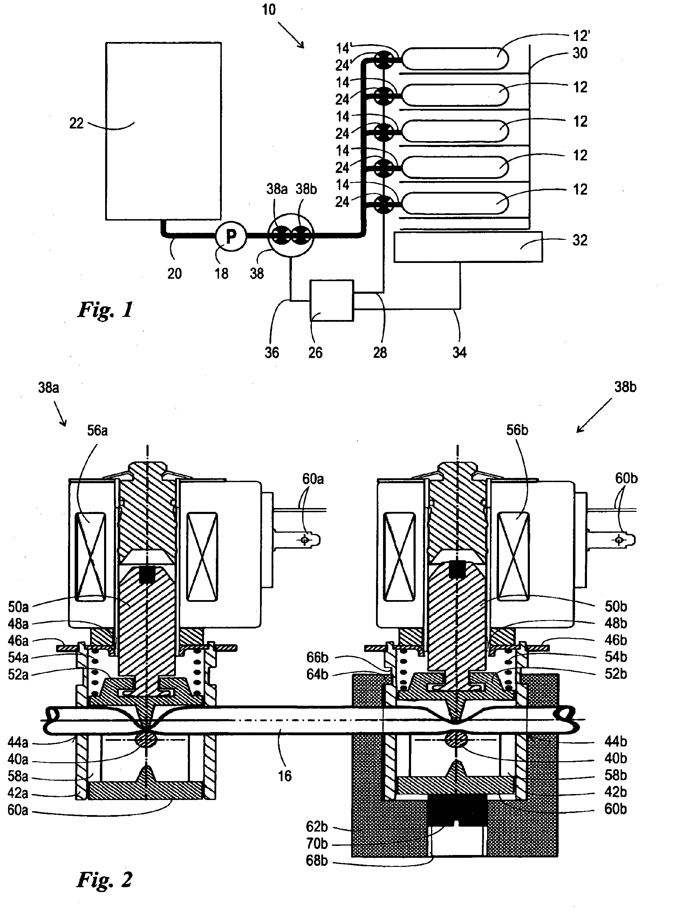

Figur 1 zeigt eine Manyfold-Abfüllvorrichtung in stark schematisierter Darstellung. Das Manyfold-Abfüllsystem wird lediglich als beispielhaftes Anwendungsgebiet der erfindungsgemäßen Ventilvorrichtung bzw. des erfindungsgemäßen Verfahrens erläutert. Eine Beschränkung der Erfindung auf Manyfold-Abfüllsysteme oder überhaupt auf Abfüllsysteme ist nicht beabsichtigt.

Als Manyfold 10 wird eine Einheit aus einer Mehrzahl (hier fünf) flexiblen Beuteln 12, 12' bezeichnet, die über individuelle Verbindungsschlauchstücke 14, 14' mit einem Hauptschlauch 16 verbunden sind. Derartige Einheiten können vorkonfektioniert und als ganzes sterilisiert werden. Insbesondere in der Pharma- und Biotechnologie-Industrie finden derartige vorkonfektionierte und vorsterilisierte Einheiten Verwendung bei der Verpackung steriler Flüssigkeiten in leicht handhabbaren Gefäßen. Hierzu wird der Hauptschlauch 16 über einen nicht dargestellten Sterilverbinder mit einer Pumpe 18 verbunden, die an einem Auslassstutzen 20 eines Vorratsbehälters 22 angeschlossen ist. Alternativ zu der Pumpe 18 kann auch ein im Vorratsbehälter 22 aufgebauter Überdruck, ein Gefälle oder ähnliches genutzt werden.

Wie in Figur 1 erkennbar ist jedem Beutel 12, 12' im Bereich seines ihm zugeordneten Verbindungsschlauchstücks 14, 14' ein Schlauchquetschventil 24, 24' vorgeschaltet, mit welchem ein Volumenfluss aus dem Hauptschlauch 16 in jeden einzelnen Beutel 12 individuell zugelassen oder verhindert werden kann. Die als einfache Ein-/ Aus-Schlauchquetschventile ausgebildeten Ventile 24, 24' werden von einer Steuereinheit 26 über eine Steuerleitung 28 angesteuert. Die Beutel 12, 12' sind in einem Gestell 30 gelagert, welches seinerseits auf dem Wägeteller einer elektronischen Wägeeinrichtung 32 steht. Die Wägeeinrichtung 32 ist über eine Steuerleitung 34 mit der Steuereinheit 26 verbunden.

Weiter ist die Steuereinheit 26 über eine Steuerleitung 36 mit einem Hauptventil 38 verbunden, welches erfindungsgemäß als Doppel-Schlauchquetschventil ausgebildet ist. Details einer speziellen Ausführungsform des Hauptventils 38 werden weiter unten im Zusammenhang mit Figur 2 erläutert. Zur Erläuterung des grundsätzlichen Abfüllvorgangs unter Verwendung eines erfindungsgemäßen Hauptventils 38 genügt die schematische Darstellung der Figur 1.

Das Hauptventil 38 umfasst zwei hintereinandergeschaltete Schlauchquetschventile 38a und 38b. Diese sollen nachfolgend als erstes oder Vollsperrventil 38a und als zweites oder Teilsperrventil 38b angesprochen werden. Die räumliche Schaltreihenfolge der Ventile 38a und 38b ist nicht von Bedeutung. Es bietet sich jedoch an, beide Ventile nah benachbart zueinander auf einem gemeinsamen Träger anzuordnen und vorzugsweise sogar ein gemeinsames Gehäuse für beide Ventile 38a,b vorzusehen.

Das Vollsperrventil 38a weist zwei Schaltstellungen auf, nämlich eine Öffnungsstellung, in der der Querschnitt des in das Vollsperrventil 38a eingelegten Schlauches vollständig geöffnet ist und eine Verschlussstellung, in der der Schlauchquerschnitt vollständig geschlossen ist, weil der Schlauch 16 zwischen einem Schlauchstößel und einem festen Schlauchsitz derart kraftbeaufschlagt wird, dass die Schlauchwände im Quetschbereich kollabieren. Das Teilsperrventil 38b kann ebenfalls zwischen zwei Stellungen, nämlich einer Öffnungsstellung und einer Verschlussstellung schalten, wobei in der Verschlussstellung zwischen dem Quetschstößel und dem festen Schlauchsitz ein Abstand gewahrt bleibt, der größer ist als die doppelte Dicke der Schlauchwände, sodass der Schlauchquerschnitt im Quetschbereich aufgrund der Eigenelastizität der Schlauchwände sowie aufgrund des Innendrucks des im Schlauch befindlichen Mediums in geringem Maße geöffnet bleibt.

Zu Beginn des Abfüllvorgangs wird die Pumpe 18 gestartet, während die Ventile 24, 24' geschlossen sind. Beide Ventile 38a, b des Hauptventils 38 werden in ihre Öffnungsstellung überführt, sodass sich der Hauptschlauch 16 bis zu den Ventilen 24, 24' füllt. Nach dieser Vorflutung wird die Wägeeinrichtung 32 tariert. Anschließend wird ein Ventil 24', geöffnet, sodass Medium aus dem Vorratsbehälter 22 aufgrund des von der Pumpe 18 aufgebauten Drucks mit maximalem Volumenfluss in den ersten Beutel 12' strömt. Während dieses Füllvorgangs des ersten Beutels 12' wird die Gewichtszunahme von der Wägeeinrichtung 32 überwacht, indem kontinuierlich Gewichtswerte erfasst und an die Steuereinheit 26 weitgeleitet werden. Sobald ein Gewichtswert erreicht ist, der knapp unter dem angestrebten Maximalfüllgewicht liegt, beendet die Steuereinheit 26 die Aktivierung des Teilsperrventils 38b, sodass dieses in seine Verschlussstellung übergeht, in der ein geringer Teil des Schlauchquerschnitts frei ist. Hierdurch wird der mögliche Volumenfluss durch den Hauptschlauch 16 stark eingeschränkt. Die weitere Füllung des Beutels 12' erfolgt somit deutlich verlangsamt. Entsprechend langsam steigt auch das von der Wägeeinrichtung 32 überwachte Gesamtgewicht.

Sobald die Steuereinheit 26 von der Wägeeinrichtung 32 einen Gewichtswert gemeldet bekommt, der einem vorgegebenen Zielgewichtswert entspricht, beendet sie auch die Aktivierung des Vollsperrventils 38a, sodass dieses in seine Verschlussstellung übergeht, in der der Querschnitt des Hauptschlauchs 16 vollständig verschlossen ist. Durch abschließendes Schließen des dem gerade befüllten Beutel 12 vorgeschalteten Individualventils 24' wird die Befüllung des ersten Beutels 12' beendet. Die Befüllung der übrigen Beutel 12 erfolgt nacheinander in analoger Weise, wobei jeder Beutelbefüllung ein Tarieren der Wägeeinrichtung vorangehen kann.

Figur 2 zeigt eine detailliertere Darstellung einer möglichen Ausführungsform des Hauptventils 38 mit seinen beiden Einzelventilen 38a und 38b. Jedes Ventil enthält einen Schlauchsitz 40a,b, der eine Gehäusehülse 42a,b durchsetzt und mit dieser stabil verbunden ist. Die Gehäusehülse 42a,b weist senkrecht zur Erstreckungsrichtung des Schlauchsitzes 40a,b eine schlitzartige Öffnung 44a,b auf, sodass der Schlauch 16 in die Gehäusehülse 42a,b querender Weise so eingelegt werden kann, dass eine Schlauchseite auf der Oberseite des Schlauchsitzes 40a,b zu liegen kommt.

Die Gehäusehülse 42a,b ist mittels eines Gehäusedeckels 46a,b verschlossen, der eine zentrale Öffnung 48a,b aufweist, welche von einem Quetschstößel 50a,b durchsetzt wird. Der im Inneren der Gehäusehülse 42a,b angeordnete Fuß 52a,b des Quetschstößels 50a,b ist mit einer Druckfeder 54a,b gegen den Gehäusedeckel 46a,b vorgespannt, sodass ihn die Federkraft auf den Schlauchsitz 40a,b drückt. Der zwischen dem Fuß 52a,b des Quetschstößels 50a,b und dem Schlauchsitz 40a,b positionierte Schlauch 16 erfährt eine durch die Kraft der Feder 54a,b bedingte Quetschung.

Der aus der Gehäusehülse 42a,b herausragende Teil des Quetschstößels 50a,b ist innerhalb der Spulen 56a,b eines Elektromagneten angeordnet, sodass er bei Bestromung der Spulen 56a,b, die über die Kontakte 60a,b erfolgen kann, gegen die Kraft der Feder 54a,b in seine Öffnungsstellung angehoben wird, in der keine Quetschkraft mehr auf den Schlauch 16 wirkt.

Der Fuß 52a,b des Quetschstößels 50a,b ist selbst hülsenartig aufgebaut und weist seitliche, den Schlauch 16 umgreifende Langlöcher 58a,b auf, sodass der Schlauch 16 nicht nur die Gehäusehülse 42a,b sondern auch den Fuß 52a,b des Quetschstößels 50a,b durchsetzt. Die Hülse des Fußes 52a,b ist mit einem Hülsenboden 60a,b abgeschlossen. Dieser Boden 60a,b schließt bündig mit der Innenseite der Gehäusehülse 42a,b ab und ist mit der Bewegung des Quetschstößels 50a,b in dieser axial bewegbar.

Der Hülsenboden 60b des Teilschlussventils 38b bildet den Ansatz für den erfindungsgemäßen Anschlag zur Begrenzung des Stellweges des Quetschstößels 50b. Das im Übrigen mit dem Vollsperrventil 38a baugleiche Teilsperrventil 38b weist eine Kappe 62b auf, die die Gehäusehülse 42b umgreift und in radialer Richtung mit einem Kragen 64b in eine Nut 66b der Gehäusehülse 42b eingreift. In ihrem Kappenboden weist die Kappe 62b eine Gewindebohrung 68b auf, in der eine Stellschraube 70b gelagert ist. Diese lässt sich bis in die Gehäusehülse 42b hineindrehen, wo sie an dem Hülsenboden 60b des Quetschstößelfußes 52b anschlägt. Weiterer Vortrieb der Stellschraube 70b führt zu einem Anheben des gesamten Quetschstößels 50b gegen die Kraft der Feder 54b. Dies führt zu einer Entlastung des Schlauches 16.

Die Öffnungsstellung des Teilsperrventils 38b, die bei Bestromung der Spule 56b erzielt wird, wird hierdurch nicht modifiziert. Ohne Bestromung kann jedoch der Quetschstößel 50b nicht in die Vollverschlussstellung wie im nichtmodifizierten Vollsperrventil 38a zurückkehren. Vielmehr findet er in einer Teilverschlussstellung, in der der Schlauch 16 nicht vollständig verschlossen ist, mit seinem Hülsenboden 60b Anschlag an der Stellschraube 70b.

Die Kappe 62b ist bevorzugt mehrteilig ausgebildet, um einen vollumfänglichen Formschluss zwischen dem Kragen 64b und der Nut 66b zu ermöglichen. Weiter kann die Kappe 62b mit in Figur 2 nicht dargestellten, seitlichen Justierschrauben versehen sein, die die Kappenseitenwände durchsetzen und sich gegen die Außenwand der Gehäusehülse 42b abstützen. Hierdurch kann eine Feinjustage erreicht werden, die erforderlich ist, um Fertigungstoleranzen auszugleichen. Die oben genannte mehrteilige Ausbildung der Kappe 62b ist in diesem Fall besonders vorteilhaft, weil sie es erlaubt, die Kappe z.B. zur Reinigung abzunehmen und erneut zu montieren ohne Änderungen an der Feinjustage vornehmen zu müssen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere ist die Erfindung nicht auf Magnetventile beschränkt. Beispielsweise können auch pneumatisch oder hydraulisch betätigte Schlauchquetschventile im Rahmen der Erfindung Einsatz finden. Auch ist es nicht zwingend erforderlich, ein handelsübliches Schlauchquetschventil mit einer Kappe zur Realisierung des Anschlages zu versehen. Dies kann jedoch eine wirtschaftlich sinnvolle Lösung darstellen; alternativ kann der Anschlag auch an anderer Stelle innerhalb eines modifizierten handelsüblichen oder eines Spezialventils vorgesehen sein. Schließlich muss die Öffnungsstellung des Ventils 38a,b nicht zwingend eine vollständige Entfaltung des eingelegten Schlauches erlauben. Es wird in der Praxis sogar die Regel sein, dass der Schlauch zu seiner besseren Haltung geringfügig eingespannt und daher leicht deformiert ist.

### Bezugszeichenliste

- 10: Manyfold
- 12, 12': Beutel
- 14, 14': Verbindungsschlauchstück
- 16: Hauptschlauch
- 18: Pumpe
- 20: Auslassstutzen
- 22: Vorratsbehälter
- 24, 24': Beuteleinlassventil
- 26: Steuereinheit
- 28: Steuerleitung
- 30: Trägergestell
- 32: Wägeeinrichtung
- 34: Steuerleitung
- 36: Steuerleitung
- 38: Hauptventil
- 38a: Vollschlussventil von 38
- 38b: Teilschlussventil von 38
- 40a,b: Schlauchsitz
- 42a,b: Gehäusehülse
- 44a,b: Schlitz in 42a,b
- 46a,b: Gehäusedeckel
- 48a,b: zentrale Öffnung in 46a,b
- 50a,b: Quetschstößel
- 52a,b: Fuß von 50a,b
- 54a,b: Druckfeder
- 56a,b: Magnetspule
- 58a,b: Langloch in 52a,b
- 60a,b: Hülsenboden von 52a,b
- 62b: Kappe
- 64b: Kragen
- 66b: Nut
- 68b: Gewindebohrung
- 70b: Stellschraube

## Patentansprüche

1. Ventilvorrichtung, umfassend ein erstes und ein zweites ansteuerbares Schlauchquetschventil (38a,b) mit je einem festen Schlauchsitz (40a,b) und je einem relativ zu dem festen Schlauchsitz (40a,b) bewegbaren und durch Federkraft in Richtung auf diesen vorgespannten Quetschstößel (50a,b), der mittels einer Krafterzeugungseinheit (56a,b) in deren aktiviertem Zustand gegen die Federkraft in eine vorgegebene Öffnungsstellung überführbar ist,
**dadurch gekennzeichnet,**
**dass** in dem zweiten Schlauchquetschventil (38b) der Weg des Quetschstößels (50b) in Richtung der Vorspannung durch einen einstellbaren Anschlag (70b)begrenzt ist.

2. Ventilvorrichtung nach Anspruch 1,
**dadurch gekennzeichnet,**
**dass** der Querschnitt eines in beide Schlauchquetschventile (38a,b) eingelegten, elastischen Schlauchs (16) im nicht-aktivierten Zustand von dem ersten Schlauchquetschventil (38a) vollständig und von dem zweiten Schlauchquetschventil (38b) in einem durch die Einstellung des Anschlags (70b) definierten Maße unvollständig verschlossen ist.

3. Ventilvorrichtung nach einem der vorangehenden Ansprüche, **dadurch gekennzeichnet,**
**dass** der Schlauch (16) ein Element einer Flüssigkeit leitenden Verbindung zwischen einem Vorratsbehälter (22) und einem Zielbehälter (12, 12') ist.

4. Ventilvorrichtung nach Anspruch 3,
**dadurch gekennzeichnet,**
**dass** weiter eine mit den Krafterzeugungseinheiten (56a,b) der Schlauchquetschventile (38a,b) verbundene Steuereinheit vorgesehen ist, die in einem ersten Abschnitt eines Abfüllvorgangs, bei dem Flüssigkeit von dem Vorratsbehälter (22) durch den Schlauch (16) zu dem Zielbehälter (12, 12') transportiert wird, die Krafterzeugungseinheiten (56a,b) beider Schlauchquetschventile (38a,b) aktiviert und in einem zweiten Abschnitt des Abfüllvorgangs nur die Krafterzeugungseinheit (56a) des ersten Schlauchquetschventils (38a) aktiviert.

5. Ventilvorrichtung nach Anspruch 4,
**dadurch gekennzeichnet,**
**dass** eine das Gewicht des Zielbehälters (12, 12') kontinuierlich erfassende Wägevorrichtung (32) mit der Steuereinheit (26) verbunden ist und die Steuereinheit (26) eingerichtet ist, sobald die Wägevorrichtung (32) einen vorgegebenen ersten Gewichtssollwert erfasst, eine Aktivierung der Krafterzeugungseinrichtung (56b) des zweiten Schlauchquetschventils (38b) zu beenden und eine Aktivierung der Krafterzeugungseinrichtung (56a) des ersten Schlauchquetschventils (38a) fortzusetzen.

6. Ventilvorrichtung nach Anspruch 5,
**dadurch gekennzeichnet,**
**dass** die Steuereinheit (26) weiter eingerichtet ist, nach der Beendigung der Aktivierung der Krafterzeugungseinrichtung (56b) des zweiten Schlauchquetschventils (38b) auch die Aktivierung der Krafterzeugungseinrichtung (56a) des ersten Schlauchquetschventils zu beenden, sobald die Wägevorrichtung (32) einen vorgegebenen zweiten Gewichtssollwert, der größer ist als der erste Gewichtssollwert, erfasst.

7. Ventilvorrichtung nach einem der vorangehenden Ansprüche
**dadurch gekennzeichnet,**
**dass** die Krafterzeugungseinrichtungen der Schlauchquetschventile (38a,b) als Elektromagneten (56a,b) ausgebildet sind, deren Aktivierung durch Bestromung erfolgt.

8. Ventilvorrichtung nach einem der vorangehenden Ansprüche
**dadurch gekennzeichnet,**
**dass** der Anschlag als eine in axialer Verlängerung des Quetschstößels (50b) angeordnete Stellschraube (70b) ausgebildet ist, die in einer formschlüssig mit einem Gehäuse (42b) des zweiten Schlauchquetschventils (38b) verbundenen, steifen Kappe (62b) gelagert ist.

9. Verfahren zum Abfüllen einer Flüssigkeit aus einem Vorratsbehälter (22) durch einen elastischen Schlauch (16) in einen Zielbehälter (12, 12'), wobei der Schlauch (16) eingelegt ist in eine Ventilvorrichtung (38), umfassend ein erstes und ein zweites ansteuerbares Schlauchquetschventil (38a,b) mit je einem festen Schlauchsitz(40a,b) und je einem relativ zu dem festen Schlauchsitz (40a,b) bewegbaren und durch Federkraft in Richtung auf diesen vorgespannten Quetschstößel (50a,b), der mittels einer Krafterzeugungseinrichtung (56a,b) in deren aktiviertem Zustand gegen die Federkraft in eine vorgegebene Öffnungsstellung überführbar ist,
**dadurch gekennzeichnet,**
**dass** in dem zweiten Schlauchquetschventil (38b) der Weg des Quetschstößels (50b) in Richtung der Vorspannung durch einen einstellbaren Anschlag (70b) begrenzt ist und in einem ersten Verfahrensabschnitt die Krafterzeugungseinrichtungen (56a,b) beider Schlauchquetschventile (38a,b) aktiviert werden und in einem zweiten, nachfolgenden Verfahrensabschnitt nur die Krafterzeugungseinrichtung (56a) des ersten Schlauchquetschventils (38) aktiviert-wird.

10. Verfahren nach Anspruch 9,
**dadurch gekennzeichnet,**
**dass** das Gewicht des Zielbehälters (22) kontinuierlich erfasst wird und, sobald ein vorgegebener erster Gewichtssollwert erreicht ist, eine Aktivierung der Krafterzeugungseinrichtung (56b) des zweiten Schlauchquetschventils (38b) beendet und eine Aktivierung der Krafterzeugungseinrichtung (56a) des ersten Schlauchquetschventils (38a) fortgesetzt wird.

11. Verfahren nach Anspruch 10,
**dadurch gekennzeichnet,**
**dass** nach der Beendigung der Aktivierung der Krafterzeugungseinrichtung (56b) des zweiten Schlauchquetschventils (38b)auch die Aktivierung der Krafterzeugungseinrichtung (56a) des ersten Schlauchquetschventils (38a) beendet wird, sobald ein vorgegebener zweiter Gewichtssollwert, der größer ist als der erste Gewichtssollwert, erreicht ist.

12. Verfahren nach einem der Ansprüche 9 bis 11,
**dadurch gekennzeichnet,**
**dass** die Krafterzeugungseinrichtungen der Schlauchquetschventile (38a,b) als Elektromagneten (56a,b) ausgebildet sind, deren Aktivierung durch Bestromung erfolgt.

## Claims

1. Valve device, comprising a first and a second activatable hose crush valve (38a, b) each with a respective fixed hose seat (40a, b) and a respective crush ram (50a, b), which is movable relative to the fixed hose seat (40a, b) and biased in direction towards that by a spring force and which is transferrable against the spring force into a predetermined open setting by means of a force generating unit (56a, b) in the activated state thereof, **characterised in that** in the second hose crush valve (38b) the travel of the crush ram (50b) in the direction of the biasing is limited by a settable abutment (70b).

2. Valve device according to claim 1, **characterised in that** the cross-section of a resilient hose (16), which is placed in the two hose crush valves (38a, 38b), in the non-actived state is completely closed by the first hose crush valve (38a) and is incompletely closed by the second hose crush valve (38b) to an extent defined by the setting of the abutment (70b).

3. Valve device according to one of the preceding claims, **characterised in that** the hose (16) is an element of a liquid-conducting connection between a storage container (22) and a target container (12, 12').

4. Valve device according to claim 3, **characterised in that** in addition a control unit connected with the force generating units (56a, b) of the hose crush valves (38a, b) is provided, which control unit in a first section of a filling process, in which the liquid is transported from the storage container (22) through the hose (16) to the target container (12, 12'), activates the force generating units (56a, b) of the two hose crush valves (38a, b) and in a second section of the filling process activates only the force generating unit (56a) of the first hose crush valve (38a).

5. Valve device according to claim 4, **characterised in that** a weighing device (32) continuously detecting the weight of the target container (12, 12') is connected with the control unit (26) and the control unit (26) is arranged to terminate activation of the force generating device (56b) of the second hose crush valve (38b) and continue activation of the force generating device (56a) of the first hose crush valve (38a) as soon as the weighing device (32) detects a predetermined first weight target value.

6. Valve device according to claim 5, **characterised in that** the control unit (26) is further arranged, after termination of the activation of the force generating unit (56b) of the second hose crush valve (38b), to also terminate activation of the force generating device (56a) of the first hose crush valve as soon as the weighing device (32) detects a predetermined second weight target value greater than the first weight target value.

7. Valve device according to any one of the preceding claims, **characterised in that** the force generating devices of the hose crush valves (38a, b) are constructed as electromagnets (56a, b), activation of which takes place by application of current.

8. Valve device according to any one of the preceding claims, **characterised in that** the abutment is constructed as a setting screw (70b), which is arranged in axial prolongation of the crush ram (50b) and which is mounted in a stiff cap (62b) mechanically positively connected with a housing (42b) of the second hose crush valve (38b).

9. Method for filling a target container (12, 12') with a liquid from a storage container (22) via a resilient hose (16), wherein the hose (16) is placed in a valve device (38) comprising a first and a second activatable hose crush valve (38a, b) each with a fixed hose seat (40a, b) and a respective crush ram (50a, b), which is movable relative to the fixed hose seat (40a, b) and biased in the direction thereof by spring force and which is transferrable against the spring force into a predetermined open setting by means of a force generating device (56a, b) in the activated state thereof, **characterised in that** in the second hose crush valve (38b) the travel of the crush ram (50b) in the direction of the biasing is limited by a settable abutment (70b) and in a first method step the force generating devices (56a, b) of the two hose crush valves (38a, b) are activated and in a second, subsequent method step only the force generating device (56a) of the first hose crush valve (38) is activated.

10. Method according to claim 9, **characterised in that** the weight of the target container (22) is continuously detected and as soon as a predetermined first weight target value is reached activation of the force generating device (56b) of the second hose crush valve (38b) is terminated and activation of the force generating device (56a) of the first hose crush valve (38a) is continued.

11. Method according to claim 10, **characterised in that** after termination of activation of the force generating device (56b) of the second hose crush valve (38b) the activation of the force generating device (56a) of the first hose crush valve (38a) is also terminated as soon as a predetermined second weight target value greater than the first weight target value is reached.

12. Method according to any one of claims 9 to 11, **characterised in that** the force generating devices of the hose crush valves (38a, b) are constructed as electromagnets (56a, b), the activation of which takes place by application of current.

## Revendications

1. Dispositif à soupape, comprenant une première et une deuxième soupape de compression (38a, b) de tuyau pouvant être commandée, comprenant chacune un siège (40a, b) de tuyau fixe et un poussoir de compression (50a, b), mobile par rapport au siège (40a, b) de tuyau fixe et précontraint en direction de celui-ci par une force élastique, qui, dans son état activé contre la force élastique, peut être placé dans une position d'ouverture prédéterminée au moyen d'une unité de production de force (56a, b),
**caractérisé en ce**
**que**, dans la deuxième soupape de compression (38b) de tuyau, la course du poussoir de compression (50b) est limitée dans la direction de la précontrainte par une butée (70b) réglable.

2. Dispositif de soupape selon la revendication 1,
**caractérisé en ce**
**que** la section transversale d'un tuyau (16) élastique inséré dans les deux soupapes de compression (38a, b) de tuyau est fermée totalement à l'état non activé par la première soupape de compression (38a) de tuyau et est dans une certaine mesure incomplètement fermée par la deuxième soupape de compression (38b) de tuyau par un réglage de la butée (70b).

3. Dispositif à soupape selon l'une des revendications précédentes,
**caractérisé en ce**
**que** le tuyau (16) est un élément d'une liaison conductrice d'un liquide entre un récipient de réserve (22) et un récipient de destination (12, 12').

4. Dispositif à soupape selon la revendication 3,
**caractérisé en ce**
**qu'**en outre une unité de commande, reliée avec les unités de production de force (56a, b) des soupapes de compression (38a, b) de tuyau est prévue, qui, dans une première partie du processus de remplissage, dans lequel le liquide est transporté du récipient de réserve (22) vers le récipient de destination (12, 12') par l'intermédiaire du tuyau (16), active les unités de production de force (56a, b) des deux soupapes de compression (38a, b) de tuyau et qui, dans une deuxième partie du processus de remplissage, n'active que l'unité de production de force (56a) de la première soupape de compression (38a) de tuyau.

5. Dispositif à soupape selon la revendication 4,
**caractérisé en ce**
**qu'**un dispositif de pesée (32), relevant continuellement le poids du récipient de destination (12, 12'), est relié avec l'unité de commande (26) et que l'unité de commande (26) est conçue de telle manière, dès que le dispositif de pesée (32) relève une première valeur de poids souhaitée prédéfinie, qu'elle termine une activation de l'unité de production de force (56b) de la deuxième soupape de compression (38b) de tuyau et continue une activation de l'unité de production de force (56a) de la première soupape de compression(38a) de tuyau.

6. Dispositif à soupape selon la revendication 5,
**caractérisé en ce**
**que** l'unité de commande (26) est en outre conçue pour terminer également l'activation de l'unité de production de force (56a) de la première soupape de compression de tuyau après la fin de l'activation de l'unité de production de force (56b) de la deuxième soupape de compression (38b) de tuyau, dès que le dispositif de pesée (32) relève une deuxième valeur de poids souhaitée prédéterminée qui est supérieure à la première valeur de poids souhaitée.

7. Dispositif à soupape selon l'une des revendications précédentes,
**caractérisé en ce**
**que** les unités de production de force des soupapes de compression (38a, b) de tuyau sont conçues sous la forme d'électro-aimants dont l'activation s'effectue par une mise sous tension.

8. Dispositif à soupape selon l'une des revendications précédentes,
**caractérisé en ce**
**que** la butée est conçue sous la forme d'une vis de réglage (70b), disposée dans une prolongation axiale du poussoir de compression (50b), qui est logée dans un cache (62b) rigide, relié par complémentarité des formes avec un logement (42b) de la deuxième soupape de compression (38b) de tuyau.

9. Procédé de remplissage par un liquide à partir d'un récipient de réserve (22) vers un récipient de destination (12, 12') par l'intermédiaire d'un tuyau (16) élastique, le tuyau (16) étant inséré dans un dispositif à soupape (38), comprenant une première et une deuxième soupape de compression (38a, b) de tuyau pouvant être commandées, comportant chacune un siège (40a, b) de tuyau fixe, et, par rapport à ce siège (40a, b) de tuyau fixe, un poussoir de compression (50a, b) mobile et précontraint en direction de celui-ci par l'intermédiaire d'une unité de production de force (56a, b), qui, dans son état activé, peut être placé dans une position d'ouverture prédéterminée à l'encontre de la force élastique,
**caractérisé en ce**
**que**, dans la deuxième soupape de compression (38b) de tuyau, la course du poussoir de compression (50b) en direction de la précontrainte est limitée par une butée (70b) réglable, et que, dans une première partie du procédé, les unités de production de force (56a, b) des deux soupapes de compression (38a, b) de tuyau sont activées et que, dans une deuxième partie du procédé, uniquement l'unité de production de force (56a) de la première soupape de compression (38) de tuyau est activée.

10. Procédé selon la revendication 9,
**caractérisé en ce**
**que** le poids du récipient de destination (22) est continuellement relevé et, dès qu'une première valeur de poids souhaitée prédéterminée est atteinte, une activation de l'unité de production de force (56b) de la deuxième soupape de compression (38b) de tuyau est achevée et une activation de l'unité de production de force (56a) de la première soupape de compression (38a) de tuyau est poursuivie.

11. Procédé selon la revendication 10,
**caractérisé en ce**
**qu'**après l'achèvement de l'activation de l'unité de production de force (56b) de la deuxième soupape de compression (38b) de tuyau, l'activation de l'unité de production de force (56a) de la première soupape de compression (38a) est également achevée dès qu'une deuxième valeur de poids souhaitée prédéterminée, qui est supérieure à la première valeur de poids souhaitée prédéterminée, est atteinte.

12. Procédé selon l'une des revendications 9 à 11,
**caractérisé en ce**
**que** les unités de production de forces des soupapes de compression (38a, b) sont conçues sous la forme d'électro-aimants dont l'activation s'effectue par une mise sous tension.
